# EUROPÄISCHE PATENTSCHRIFT

(11) **EP 0 907 891 B1**
(45) Veröffentlichungstag und Bekanntmachung des Hinweises auf die Patenterteilung: **04.12.2002**
(21) Anmeldenummer: 97931622.1
(22) Anmeldetag: 18.06.1997
(51) Int. Cl.: G01P 3/48, G01L 3/10

(54) **ANORDNUNG ZUR BERÜHRUNGSLOSEN INDUKTIVEN ÜBERTRAGUNG ELEKTRISCHER MESSGRÖSSEN UND/ODER ELEKTRISCHER ENERGIE ZWISCHEN EINEM ROTOR UND EINEM STATOR**
ARRANGEMENT FOR THE CONTACTLESS INDUCTIVE TRANSMISSION OF ELECTRIC MEASUREMENT VALUES AND/OR ELECTRIC ENERGY BETWEEN A ROTOR AND A STATOR
DISPOSITIF DE TRANSMISSION SANS CONTACT PAR INDUCTION DE VALEURS ELECTRIQUES DE MESURE ET/OU D'ENERGIE ELECTRIQUE ENTRE UN ROTOR ET UN STATOR

(30) Priorität: 24.06.1996 DE 19625160
(43) Veröffentlichungstag der Anmeldung: 14.04.1999
(73) Patentinhaber: SIEMENS AKTIENGESELLSCHAFT, 80333 München (DE)
(72) Erfinder: DOEMENS, Günter, D-83607 Holzkirchen (DE); GILCH, Markus, D-85419 Mauern (DE)
(86) Internationale Anmeldenummer: DE9701248
(87) Internationale Veröffentlichungsnummer: WO97049996

(56) Entgegenhaltungen:
- EP-A- 0 712 105
- DE-A- 4 328 600

## Beschreibung

Die Erfindung betrifft eine Anordnung zur berührungslosen, induktiven Übertragung elektrischer Meßgrößen und/oder elektrischer Energie zwischen einem Rotor und einem Stator, mit
- mindestens einer auf dem Rotor angeordneten Rotorspule mit mindestens einer Windung;
- mindestens einer auf dem Stator angeordneten Statorspule mit mindestens einer Windung;
- wobei
- zwischen Rotorspule und Statorspule eine magnetische Kopplung besteht.

Die berührungslose, präzise Messung des abgegebenen Drehmomentes und damit der mechanischen Leistung an rotierenden Wellen ist heute eines der vordringlichsten sensorischen Probleme in der Energie- und Automatisierungstechnik. Die Anwendungsfelder liegen in der Überwachung und Regelung von Antrieben sowie in der Wirkungsgradoptimierung von Energieumwandlungsanlagen. Aus der EP-B-0 354 386 ist ein Meßaufnehmer mit kapazitivem Wandler für berührungslose Messung von Drehmomenten an rotierenden Wellen bekannt, der bei geringen Herstellkosten sowie bei geringem axialen Platzbedarf das über die Welle übertragene Moment und damit auch die mechanische Leistung mit einer Genauigkeit von weniger als 1% erfassen kann und ein dem Drehmoment proportionales elektrisches Signal abgibt.

Zur berührungslosen Messung des Drehmomentes sind im allgemeinen aus Rotorspule und Statorspule bestehende Spulensysteme vorgesehen, über welche das Meßsignal und/oder die elektrische Energie für den Sensor bzw. Meßaufnehmer übertragen werden. Bei den entsprechenden rotierenden induktiven Übertragungssytemen ist es bekannt und technisch naheliegend, aus der Feldinhomogenität im Bereich der Stromeinspeisung ein Signal für die Drehzahl abzuleiten.

Aus der DE-A-41 16 085 ist ein Verfahren zur zyklisch absoluten Wegemessung bei einer sich drehenden Welle bekannt, bei welchem den Phasenwicklungen eines Drehstromsynchronmotors, der über seinen Rotor die Welle antreibt, zusätzlich zu den die Motorleistung erbringenden Speisespannungen ein Referenzsignal anderer Frequenz zugeführt wird. Die durch die Drehung des Rotors verursachten Induktivitätsschwankungen an den einzelnen Wicklungen und die dadurch bedingten Schwankungen der Meßsignalamplitude werden erfaßt, mit üblichen Demodulationsund Filtermitteln von der eigentlichen Referenzsignalfrequenz abgetrennt, und es werden aus ihnen zwei um 90° gegeneinander phasenverschobene Sinusschwingungen erzeugt, die die jeweilige Stellung des Rotors und damit der Welle kennzeichnen. Dadurch kann ein zusätzlicher, mit der Welle zu koppelnder Resolver oder ähnliches Winkelmeßgerät eingespart werden. Eine gleichzeitige Übertragung der elektrischen Meßgrößen eines auf der Welle angeordneten Sensors oder Meßaufnehmers ist mit einer derartigen Anordnung jedoch nicht möglich.

Der Erfindung liegt das Problem zugrunde, bei einer gattungsgemäßen Anordnung zur berührungslosen induktiven Übertragung elektrischer Meßgrößen und/oder elektrischer Energie zwischen einem Rotor und einem Stator ohne zusätzlichen Aufwand einen hochauflösenden Winkeldrehgeber zu realisieren und damit eine präzise Erfassung der jeweiligen Winkellage und/oder der jeweiligen Winkelgeschwindigkeit des Rotors zu ermöglichen.

Diese Aufgabe wird erfindungsgemäß durch eine Anordnung nach Anspruch 1 gelöst.

Vorteilhafte Ausgestaltungen der Erfindung gehen aus den Unabhängigen Ansprüchen hervor.

Die erfindungsgemäße Ausgestaltung der Statorspule oder der Rotorspule mit lokalen und vorzugsweise auch periodischen Form- und/oder Materialänderungen ermöglicht ohne jeglichen Zusatzaufwand eine Nutzung der Anordnung als hochauflösender Winkeldrehgeber nach dem Prinzip der inkrementalen induktiven Winkelmessung. Bei einer Anordnung zur berührungslosen Messung von Drehmomenten an rotierenden Wellen oder bei beliebigen anderen induktiven Übertragungssystemen für die elektrischen Meßgrößen eines auf einer Welle angeordneten Sensors oder Meßaufnehmers kann somit gleichzeitig die jeweilige Winkelgeschwindigkeit der Welle bzw. des Rotors ermittelt werden, wobei problemlos Auflösungen von beispielsweise 240 Impulsen je Umdrehung der Welle erreicht werden.

Im folgenden werden Ausführungsbeispiele der Erfindung anhand der Zeichnung näher erläutert.

Es zeigen
Figur 1 in stark vereinfachter schematischer Darstellung einen Meßaufnehmer zur berührungslosen Messung des Drehmomentes an einem Rotor und eine Anordnung zur berührungslosen induktiven Übertragung des Meßsignals vom Rotor auf einen Stator und/oder elektrischer Energie vom Stator auf den Rotor,
Figur 2 das Prinzip der periodischen Veränderung des Radiuses der Windung der Statorspule der Anordnung gemäß Figur 1 zur Modulation des Kopplungsgrades,
Figur 3 die durch die Formänderungen der Statorspule gemäß Figur 2 bedingten Schwankungen des Kopplungsgrades,
Figur 4 die aus den Schwankungen des Kopplungsgrades gemäß Figur 2 resultierenden Schwankungen der Amplitude eines zeit- bzw. freuqenzmodulierten Meßsignals,
Figur 5 den Amplitudenschwankungen gemäß Figur 4 entsprechende Winkelimpulse,
Figur 6 eine erste Variante zur Modulation des Kopplungsgrades mit einer periodischen und lokalen Strukturierung des Leiters der Statorspule durch Querschnittsänderungen und
Figur 7 eine zweite Variante zur Modulation des Kopplungsgrades mit einer periodischen und lokalen Strukturierung des Leiters der Statorspule durch Materialänderungen.

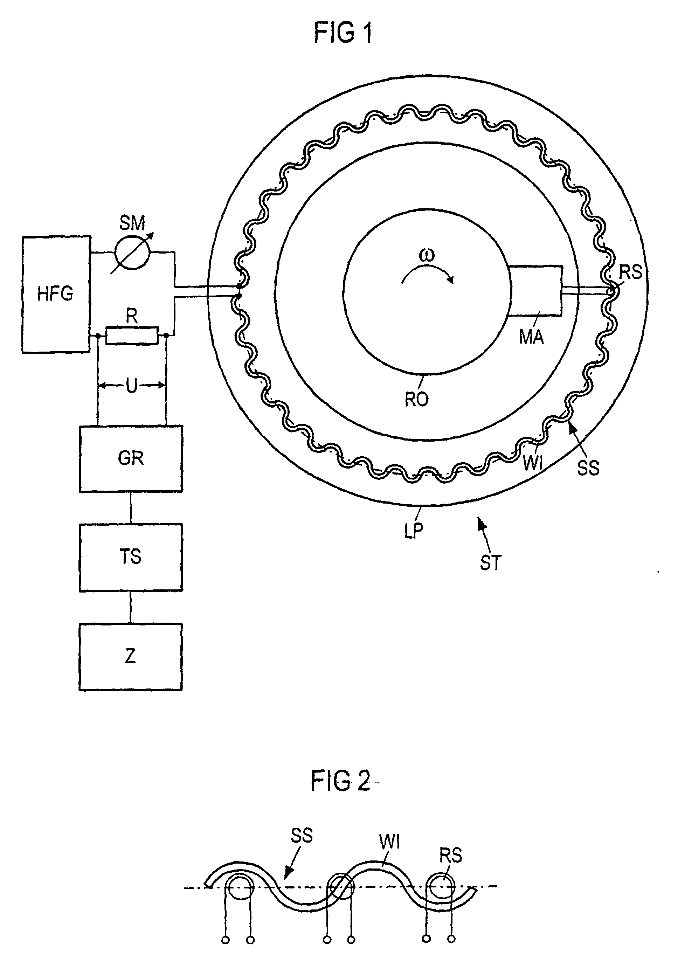

Figur 1 zeigt in stark vereinfachter schematischer Darstellung einen auf einem Rotor RO angeordneten Meßaufnehmer MA zur berührungslosen Messung des Drehmomentes am Rotor RO und eine Anordnung zur berührungslosen induktiven Übertragung des vom Meßaufnehmer MA abgegebenen Meßsignales auf einen Stator ST. Bei dem nur schematisch angedeuteten Meßaufnehmer MA handelt es sich um einen aus der EP-B-0 354 386 bekannten Meßaufnehmer mit kapazitivem Wandler.

Die Anordnung zur berührungslosen Übertragung des Meßsignals vom Rotor RO auf den Stator ST und/oder elektrischer Energie vom Stator ST auf den Rotor RO umfaßt eine auf dem Rotor RO angeordnete Rotorspule RS und eine Statorspule SS. Die aus einer einzigen Windung WI mit einer Stromeinspeisung bestehende Statorspule ST ist in Planartechnik auf einer mit dem Stator ST verbundenenen Leiterplatte LP gebildet. Die Rotorspule RS ist auf dem Rotor RO so angeordnet, daß mit der Statorspule SS eine magnetische Kopplung besteht. Es ist zu erkennen, daß der Durchmesser der Rotorspule RS wesentlich kleiner ist als der der Statorspule. Das Verhältnis der Durchmesser von Rotorspule RS und Statorspule SS beträgt beispielsweise 1:60.

Die Energieversorgung der Elektronik des auf dem Rotor RO angeordneten Meßaufnehmers MA erfolgt über einen Hochfrequenzgenerator HFG, der an die Stromeinspeisung der Statorspule SS angeschlossen ist, wobei in die eine Anschlußleitung ein Strommeßgerät SM eingeschaltet ist, während in die andere Anschlußleitung ein Widerstand R eingeschaltet ist. Die zu beiden Seiten dieses Widerstandes R anliegende Spannung U wird einem Gleichrichter GR zugeführt, welchem eine Triggerschaltung TS und ein Zähler Z nachgeordnet sind.

Mit der vorstehend geschilderten Anordnung soll neben der induktiven Übertragung des Meßsignals und/oder elektrischer Energie auch eine präzise Erfassung der Winkelgeschwindigkeit ω des Rotors RO ermöglicht werden. Hierzu wird die Statorspule SS in ihrer geometrischen Form so strukturiert, daß der Radius der Windung WI über den gesamten Umfang der Windung WI periodische Schwankungen aufweist. Aus Figur 1 und insbesondere aus Figur 2 ist ersichtlich, daß sich der Radius der Windung WI der Statorspule SS um etwa den Durchmesser der Rotorspule RS periodisch ändert. Figur 2 zeigt dabei drei verschiedene, aufeinanderfolgende Phasenlagen der Rotorspule RS im Bereich des größten und des kleinsten Durchmessers der Statorspule SS und im Bereich einer Mittelstellung.

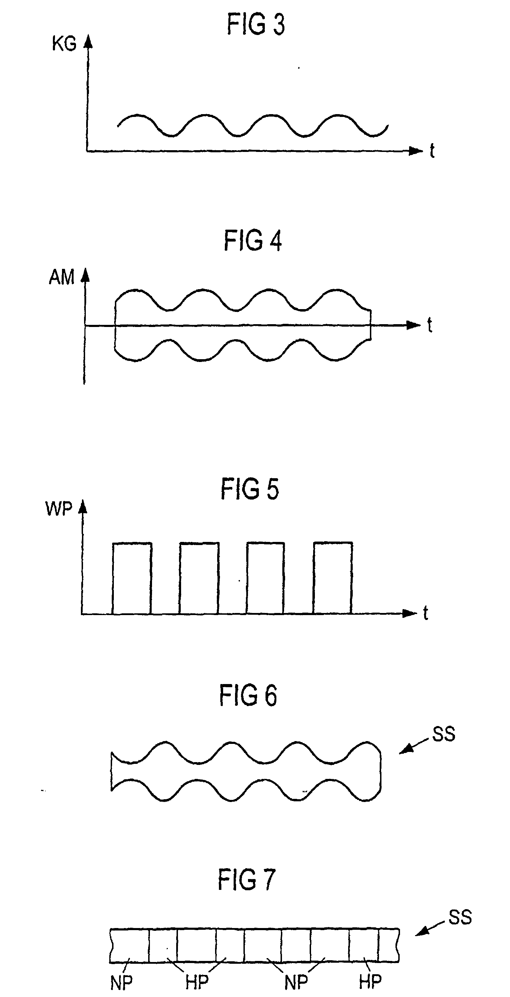

Die aus den Figuren 1 und 2 ersichtlichen Formänderungen der Statorspule SS führen zu einer periodischen und stetigen Schwankung des Kopplungsgrades KG, wobei diese Schwankungen in Figur 3 über der Zeit aufgetragen sind. Die aus den Schwankungen des Kopplungsgrades KG resultierenden Schwankungen der Amplitude AM der am Widerstand R (vergl. Figur 1) anliegenden Spannung U sind in Figur 4 dargestellt. Nach Gleichrichtung und Triggerung ergeben sich die in Figur 5 dargestellten Winkelimpulse WP. Mit Hilfe des dem Gleichrichter GR und der Triggerschaltung TS nachgeordneten Zählers Z (Figur 1) werden dann beispielsweise die vorderen und die hinteren Flanken der Winkelimpulse WP erfaßt, d.h. es wird ein hochauflösender Winkeldrehgeber realisiert, der ohne Interpolation beispielsweise 240 Impulse je Umdrehung des Rotors RO liefert. Bei diesem Ausführungsbeispiel betrug der Durchmesser der Statorspule SS 20cm, während der Durchmesser der Rotorspule RS 6 mm betrug.

Figur 6 zeigt eine erste Variante zur Modulation des Koppluungsgrades KG (vergleiche Figur 3) mit einer perdiodischen und lokalen Strukturierung des Leiters der Statorspule SS durch Querschnittsänderungen.

Figur 7 zeigt eine zweite Variante zur Modulation des Kopplungsgrades KG (vergleiche Figur 3) mit einer periodischen und lokalen Strukturierung des Leiters der Statorspule SS durch Materialänderung. Hier wechseln sich in Längsrichtung des Leiters gesehen Bereiche NP mit einem Material niedriger oder normaler magnetischer Permeabilität und Bereiche HP mit einem Material hoher magnetischer Permeabilität ab. Der gleiche Effekt könnte auch durch die periodsche Anbringung magnetischer Klötzchen an dem die Statorspule SS bildenden Leiter erzielt werden.

Abweichend von den vorstehend beschriebenen Ausführungsbeispielen können die in Figur 3 dargestellten Schwankungen des Kopplungsgrades KG auch dadurch realisiert werden, daß die Rotorspule durch Form- und/oder Materialänderungen entsprechend strukturiert wird. In diesem Fall wird dann die geometrische Abmessung der Statorspule auf die Periodizität der Strukturierung der Rotorspule abgestimmt, d.h. die Statorspule erhält einen entsprechend kleinen Durchmesser.

Bei sämtlichen Ausführungsmöglichkeiten wird die zusätzliche Funktion eines hochauflösenden Winkeldrehgebers durch die aus Figur 3 ersichtlichen Schwankungen des Kopplungsgrades KG ermögliche. Die Abnahme der Kopplung ist dabei so gering gewählt, daß die Energie- bzw. Meßsignalübertragung in keiner Weise beeinträchtigt wird.

## Patentansprüche

1. Anordnung zur berührungslosen, induktiven Übertragung elektrischer Meßgrößen und/oder elektrischer Energie zwischen einem Rotor (RO) und einem Stator (ST), mit
- mindestens einer auf dem Rotor (RO) angeordneten Rotorspule (RS) mit mindestens einer Windung;
- mindestens einer auf dem Stator (ST) angeordneten Statorspule (SS) mit mindestens einer Windung (WI); wobei
- zwischen Rotorsspule (RS) und Statorspule (SS) eine magnetische Kopplung besteht,
**dadurch gekennzeichnet, daß**
- der die Windung (WI) der Rotorspule (RS) oder der Statorspule (SS) bildende Leiter durch Formänderungen wie eine von der Kreisstruktur abweichende periodische Strukur und/oder Materialänderungen wie abwechselnde Änderungen der magnetischen Eigenschaften entlang des Umfanges derart über den gesamten Umfang der Windung (WI) lokal strukturiert ist, daß sich eine Schwankung des magnetischen Kopplungsgrades (KG) ergibt ist, und daß
- Mittel für die Ableitung der jeweiligen Winkellage und/oder der jeweiligen Winkelgeschwindigkeit (ω) des Rotors (RO) aus dem zeitlichen Abstand der Kopplungsmaxima oder Kopplungsminima eines Zeit- bzw. frequenzmodulierten Meßsignals oder aus den damit verbundenen Schwankungen der übertragenen Energie vorgesehen sind.

2. Anordnung nach Anspruch 1,
**dadurch gekennzeichnet, daß**
der die Windung (WI) der Rotorspule (RS) oder der Statorspule (SS) bildende Leiter durch Form- und/oder Materialänderungen derart über den gesamten Umfang der Windung (WI) lokal und periodisch strukturiert ist, daß sich eine periodische Schwankung des magnetischen Kopplungsgrades (KG) ergibt.

3. Anordnung nach Anspruch 1 oder 2,
**dadurch gekennzeichnet, daß**
der die Windung (WI) der Rotorspule (RS) oder der Statorspule (SS) bildende Leiter durch Form- und/oder Materialänderungen derart über den gesamten Umfang der Windung (WI) lokal und periodisch strukturiert ist, daß sich eine periodische und stetige Schwankung des magnetischen Kopplungsgrades (KG) ergibt.

4. Anordnung nach einem der Ansprüche 1 bis 3,
**gekennzeichnet durch** eine auf dem Rotor angeordnete Leiterplatte, auf welcher die Rotorspule in Planartechnik gebildet ist.

5. Anornung nach einem der Ansprüche 1 bis 3,
**gekennzeichnet durch** eine auf dem Stator (ST) angeordnete Leiterplatte (LP), auf welcher die Statorspule (SS) in Planartechnik gebildet ist.

6. Anordnung nach einem der Ansprüche 1 bis 4,
**dadurch gekennzeichnet, daß**
der Radius der Windung der Rotorspule über den gesamten Umfang der Windung periodische Schwankungen aufweist.

7. Anordnung nach einem der Ansprüche 1, 2, 3 oder 5,
**dadurch gekennzeichnet, daß**
der Radius der Windung (WI) der Statorspule (SS) über den gesamten Umfang der Windung (WI) periodische Schwankungen aufweist.

8. Anordnung nach einem der Ansprüche 1, 2, 3 oder 4,
**dadurch gekennzeichnet, daß**
der Querschnitt des die Windung der Rotorspule bildenden Leiters über den gesamten Umfang der Windung periodische Schwankungen aufweist.

9. Anordnung nach einem der Ansprüche 1, 2, 3 oder 5,
**dadurch gekennzeichnet, daß**
der Querschnitt des die Windung (WI) der Statorspule (SS) bildenden Leiters über den gesamten Umfang der Windung (WI) peridische Schwankungen aufweist.

10. Anordnung nach einem der Ansprüche 1, 2, 3 oder 4,
**dadurch gekennzeichnet, daß**
der die Windung der Rotorspule bildende Leiter über den gesamten Umfang der Windung periodisch Bereiche mit einem Material hoher magnetischer Permeabilität aufweist.

11. Anordnung nach einem der Ansprüche 1, 2, 3 oder 5,
**dadurch gekennzeichnet, daß**
der die Windung (WI) der Statorspule (SS) bildende Leiter über den gesamten Umfang der Windung (WI) periodisch Bereiche mit einem Material hoher magnetischer Permeabilität (HP) aufweist.

12. Anordnung nach einem der Ansprüche 1, 2, 3, 4, 6 oder 10,
**dadurch gekennzeichnet, daß**
die geometrische Abmessung der Statorspule auf die Periodizität der Strukturierung der Windung der Rotorspule abgestimmt ist.

13. Anordnung nach den Ansprüchen 6 und 12,
**dadurch gekennzeichnet, daß**
der Durchmesser der Statorspule etwa den Schwankungen des Radiuses der Windung der Rotorspule entspricht.

14. Anordnung nach einem der Ansprüche 1, 2, 3, 5, 7, 9 oder 11,
**dadurch gekennzeichnet, daß**
die geometrische Abmessung der Rotorspule (SS) auf die Periodizität der Strukturierung der Windung (WI) der Statorspule (SS) abgestimmt ist.

15. Anordnung nach den Ansprüchen 7 und 14,
**dadurch gekennzeichnet, daß**
der Durchmesser der Rotorspule (RS) etwa den Schwankungen des Radiuses der Windung (WI) der Statorspule (SS) entspricht.

16. Verwendung einer Anordnung nach einem der Ansprüche 1 bis 15, zur berührungslosen Übertragung elektrischer Meßgrößen und/oder elektrischer Energie eines auf einem Rotor (RO) angeordneten Meßaufnehmers (MA) oder Sensors auf einem Stator (ST) und zur gleichzeitigen Ermittlung der jeweiligen Winkellage und/oder der jeweiligen Winkelgeschwindigkeit (ω) des Rotors (RO).

## Claims

1. Arrangement for non-contacting, inductive transmission of electrical measurement variables and/or electrical power between a rotor (RO) and a stator (ST), having
- at least one rotor coil (RS) which is arranged on the rotor (RO) and has at least one turn;
- at least one stator coil (SS) which is arranged on the stator (ST) and has at least one turn (WI); with
- there being a magnetic coupling between the rotor coil (RS) and the stator coil (SS),
**characterized in that**
- the conductor which forms the turn (WI) of the rotor coil (RS) or of the stator coil (SS) is structured locally by means of shape changes such as a cyclic structure, other than a circular structure, and/or material changes such as alternate changes to the magnetic characteristics along the circumference over the entire circumference of the turn (WI), such that this results in a fluctuation in the amount of magnetic coupling (KG), and **in that**
- means are provided for deriving the respective angular position and/or the respective angular velocity (ω) of the rotor (RO) from the time interval between the coupling maxima or coupling minima of a time-modulated or frequency-modulated measurement signal, or from the fluctuations, associated with them, in the transmitted power.

2. Arrangement according to Claim 1,
**characterized in that**
the conductor which forms the turn (WI) of the rotor coil (RS) or of the stator coil (SS) is structured locally and cyclically by shape and/or material changes over the entire circumference of the turn (WI) so as to produce a cyclic fluctuation in the amount of magnetic coupling (KG).

3. Arrangement according to Claim 1 or 2,
**characterized in that**
the conductor which forms the turn (WI) of the rotor coil (RS) or of the stator coil (SS) is structured locally and cyclically by shape and/or by material changes over the entire circumference of the turn (WI) so as to produce a cyclic and continuous fluctuation in the amount of magnetic coupling (KG).

4. Arrangement according to one of Claims 1 to 3,
**characterized by** a printed circuit board which is arranged on the rotor and on which the rotor coil is formed using a planar technique.

5. Arrangement according to one of Claims 1 to 3,
**characterized by** a printed circuit board (LP) which is arranged on the stator (ST) and on which the stator coil (SS) is formed using a planar technique.

6. Arrangement according to one of Claims 1 to 4,
**characterized in that** the radius of the turn of the rotor coil has cyclic fluctuations over the entire circumference of the turn.

7. Arrangement according to one of Claims 1, 2, 3 or 5,
**characterized in that**
the radius of the turn (WI) of the stator coil (SS) has cyclic fluctuations over the entire circumference of the turn (WI).

8. Arrangement according to one of Claims 1, 2, 3 or 4,
**characterized in that**
the cross section of the conductor which forms the turn of the rotor coil has cyclic fluctuations over the entire circumference of the turn.

9. Arrangement according to one of Claims 1, 2, 3 or 5,
**characterized in that**
the cross section of the conductor which forms the turn (WI) of the stator coil (SS) has cyclic fluctuations over the entire circumference of the turn (WI).

10. Arrangement according to one of Claims 1, 2, 3 or 4,
**characterized in that**
the conductor which forms the turn of the rotor coil has areas with a material of high magnetic permeability cyclically over the entire circumference of the turn.

11. Arrangement according to one of Claims 1, 2, 3 or 5,
**characterized in that**
the conductor which forms the turn (WI) of the stator coil (SS) has areas with a material of high magnetic permeability (HP) cyclically over the entire circumference of the turn (WI).

12. Arrangement according to one of Claims 1, 2, 3, 4, 6 or 10,
**characterized in that**
the geometric dimensions of the stator coil are matched to the periodicity of the structuring of the turn of the rotor coil.

13. Arrangement according to Claims 6 and 12,
**characterized in that**
the diameter of the stator coil corresponds approximately to the fluctuations in the radius of the turn of the rotor coil.

14. Arrangement according to one of Claims 1, 2, 3, 5, 7, 9 or 11,
**characterized in that**
the geometrical dimensions of the rotor coil (SS) are matched to the periodicity of the structuring of the turn (WI) of the stator coil (SS).

15. Arrangement according to Claims 7 and 14,
**characterized in that**
the diameter of the rotor coil (RS) corresponds approximately to the fluctuations of the radius of the turn (WI) of the stator coil (SS).

16. Use of an arrangement according to one of Claims 1 to 15, for non-contacting transmission of electrical measurement variables and/or electrical power of a measurement sensor (MA) which is arranged on a rotor (RO) or of a sensor on a stator (ST), and for simultaneous determination of the respective angular position and/or the respective angular velocity (ω) of the rotor (RO).

## Revendications

1. Dispositif destiné à la transmission inductive et sans contact de grandeurs électriques de mesure et/ou d'énergie électrique entre un rotor (RO) et un stator (ST) et comportant
- au moins une bobine de rotor (RS) ayant au moins une spire et montée sur le rotor (RO);
- au moins une bobine de stator (SS) ayant au moins une spire (WI) et montée sur le stator (ST);
- un couplage magnétique existant entre la bobine de rotor (RS) et la bobine de stator (SS),
**caractérisé par le fait**
- **que** le conducteur, qui constitue la spire (WI) de la bobine de rotor (RS) ou de la bobine de stator (SS), est structuré localement sur l'ensemble de la circonférence de la spire par des variations de forme, comme une structure périodique s'écartant.de la structure circulaire, et/ou par des variations de matière, comme des variations alternantes de propriétés magnétiques le long de la circonférence, de telle sorte qu'il se produit une variation du taux de couplage magnétique (KG) et
- **que** des moyens sont prévus pour déduire la position angulaire respective et/ou la vitesse angulaire (ω) respective du rotor (RO) à partir de la distance dans le temps des maxima ou des minima du couplage d'un signal de mesure modulé dans le temps ou en fréquence ou à partir des variations de l'énergie transmise, qui en résultent.

2. Dispositif selon la revendication 1
**caractérisé par le fait**
**que** le conducteur, qui constitue la spire (WI) de la bobine de rotor (RS) ou de la bobine de stator (SS), est structuré localement et périodiquement tout le long de la circonférence de la spire (WI) par des variations de forme et/ou de matière de telle sorte qu'il se produit une variation périodique du taux de couplage magnétique (KG).

3. Dispositif selon la revendication 1 ou 2
**caractérisé par le fait**
**que** le conducteur, qui constitue la spire (WI) de la bobine de rotor (RS) ou de la bobine de stator (SS), est structuré localement et périodiquement tout le long de la circonférence de la spire (WI) par des variations de forme et/ou de matière de telle sorte qu'il se produit une variation périodique et continue du taux de couplage magnétique (KG).

4. Dispositif selon l'une des revendications 1 à 3
**caractérisé par** une carte à circuits imprimés placée sur le rotor et sur laquelle est formée la bobine de rotor en technique planaire.

5. Dispositif selon l'une des revendications 1 à 3
**caractérisé par** une carte à circuits imprimés (LP) placée sur le stator (ST) et sur laquelle est formée la bobine de stator (SS) en technique planaire.

6. Dispositif selon l'une des revendications 1 à 4
**caractérisé par le fait**
**que** le rayon de la spire de la bobine de rotor comporte des variations périodiques sur l'ensemble du périmètre de la spire.

7. Dispositif selon l'une des revendications 1, 2, 3 ou 5
**caractérisé par le fait**
**que** le rayon de la spire (WI) de la bobine de stator (SS) comporte des variations périodiques sur l'ensemble du périmètre de la spire (WI).

8. Dispositif selon l'une des revendications 1, 2, 3 ou 4
**caractérisé par le fait**
**que** la section du conducteur qui forme la spire de la bobine de rotor comporte des variations périodiques sur l'ensemble du périmètre de la spire.

9. Dispositif selon l'une des revendications 1, 2, 3 ou 5
**caractérisé par le fait**
**que** la section du conducteur qui forme la spire (WI) de la bobine de stator (SS) comporte des variations périodiques sur l'ensemble du périmètre de la spire (WI).

10. Dispositif selon l'une des revendications 1, 2, 3 ou 4
**caractérisé par le fait**
**que** le conducteur qui forme la spire de la bobine de rotor comporte, sur l'ensemble du périmètre de la spire, périodiquement des zones en matière à haute perméabilité magnétique.

11. Dispositif selon l'une des revendications 1, 2, 3 ou 5
**caractérisé par le fait**
**que** le conducteur qui forme la spire (WI) de la bobine de stator (SS) comporte, sur l'ensemble du périmètre de la spire (WI), périodiquement des zones en matière à haute perméabilité magnétique (HP).

12. Dispositif selon l'une des revendications 1, 2, 3, 4, 6 ou 10
**caractérisé par le fait**
**que** les dimensions géométriques de la bobine de stator sont accordées sur la périodicité de la structuration de la spire de la bobine de rotor.

13. Dispositif selon les revendications 6 et 12
**caractérisé par le fait**
**que** le diamètre de la bobine de stator correspond à peu près aux variations du rayon de la spire de la bobine de rotor.

14. Dispositif selon l'une des revendications 1, 2, 3, 5, 7, 9 ou 11
**caractérisé par le fait**
**que** les dimensions géométriques de la bobine de rotor (SS) sont accordées sur la périodicité de la structuration de la spire (WI) de la bobine de stator (SS).

15. Dispositif selon les revendications 7 et 14
**caractérisé par le fait**
**que** le diamètre de la bobine de rotor (RS) correspond à peu près aux variations du rayon de la spire (WI) de la bobine de rotor (SS).

16. Utilisation d'un dispositif selon l'une des revendications 1 à 15 destiné à la transmission sans contact de grandeurs électriques de mesure et/ou d'énergie électrique d'un capteur de mesure (MA) monté sur un rotor (RO) ou d'un détecteur sur un stator (ST) et à la détermination simultanée de la position angulaire respective et/ou de la vitesse angulaire respective (ω) du rotor (RO).
